(19) Europäisches Patentamt

European Patent Office

Office européen des brevets

(11) **EP 1 710 117 A1**

(12) **EUROPEAN PATENT APPLICATION**

(43) Date of publication:
**11.10.2006 Bulletin 2006/41**

(51) Int Cl.:
***B60M 1/28*** (2006.01)

(21) Application number: **06112248.7**

(22) Date of filing: **05.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.04.2005 IT MI20050587**

(71) Applicant: **Mont-Ele S.r.l.**
**20034 Giussano MI (IT)**

(72) Inventors:
• **Gorla, Fausto**
**20147 Milano (IT)**
• **Maggioni, Fabrizio**
**20034 Giussano MI (IT)**
• **Pedani, Paolo**
**20058 Villasanta MI (IT)**

(74) Representative: **Modiano, Micaela Nadia**
**Dr. Modiano & Associati S.p.A.**
**Via Meravigli 16**
**20123 Milano (IT)**

(54) **Apparatus for measuring the height of the electrical contact line of a railroad, and associated method**

(57)     An apparatus for measuring the height of an electrical contact line (10) of a railroad and its variations as a function of the variations of the pressure applied by a pantograph (12), comprising, installed on board a railcar (1): first measurement means (2,3), which are adapted to measure the height of the bottom of the railcar (1) with respect to the plane that contains the rails; second measurement means (6,7), which are adapted to measure the extension of the pantograph (12) of the railcar (1); and third measurement means (5), which are adapted to measure a reference height, the first, 2nd and 3d measurement means being arranged respectively at the two mutually opposite sides of the railcar.

Fig. 3

**Description**

The present invention relates to an apparatus for characterizing the electrical contact line of a railroad and to the associated method.

More particularly, the invention relates to an apparatus for measuring the height of the electrical contact line of a railroad by using a contact system.

As it is known, electrically-powered tramway and railroad lines are provided with one or two conducting wires made of copper, i.e., a contact line, which carries electric power for moving the vehicle on the track.

The vehicle that moves on the track collects energy from the contact line by virtue of the copper element, known as wearing strip, which is rigidly applied to the upper part of a pantograph arranged on the roof of the railroad vehicle.

Substantially, the pantograph ends at its upper end with a contact bar (or bow), which is intended to make contact with the electrical contact line of the railroad. Contact between the electrical contact line of the railroad and the contact bar allows to transfer electric power from the overhead line to the motor drive. During travel, the contact bar slides along the contact line, resting thereon with adequate force, at the same time causing wear of the contact line and of said contact bar.

The height at which the contact line is laid varies along the travel direction as a function of the crossing structures, such as bridges, tunnels, underpasses and the like, and at the same time the electrical contact line can move with respect to the ideal original position due to failure or breakage of the overhead suspension elements and to variations in seasonal environmental conditions. This is of course undesirable, since it can cause incorrect contact between the electrical contact line and the contact bar, making it difficult to collect current and even making it dangerous for the rail vehicle to travel as its speed increases, due to possible interference which may occur between the contact line and the pantograph arranged on the roof of the vehicle.

It is therefore necessary to perform periodic checks of the height of the contact line and of its resilience or stiffness when it is actuated by the pantograph.

Systems which base measurement control on optical methods of the photoelectric type or on methods with laser sources with television cameras for monitoring the contact line in lateral movements, so as to provide a measurement thereof, are currently used.

Known types of device mostly use a pantograph as a support of the measurement instruments.

Other known types of device use in combination exclusively one or more laser emitters arranged on the roof of the vehicle, and two or more television cameras, which work with flat light beams which are parallel to the roof of the vehicle. In front of the television cameras and the laser emitter there is a solid straight flat mirror for rectangular mirrors inclined at 45° with respect to the plane of the roof and to the flat beam of the laser, known as measurement plane.

The solutions described above, while being suitable to provide a measurement of the height of the contact line, however have drawbacks due to lack of intrinsic precision and to the complexity of the measurement operations.

Further, contactless instruments are not able to provide a height measurement of the height that can be correlated to the pressure variation in order to calculate the elasticity of the line at the contact point.

The aim of the present invention is to provide an apparatus for characterizing the electrical contact line which allows to obtain extremely precise measurements.

Within this aim, an object of the present invention is to provide an apparatus for characterizing the electrical contact line of a railroad which calculates the exact height of the point of contact between the collector bow or contact bar of the pantograph and the catenary, i.e., the configuration of the electrical contact line that lies between two overhead supports.

Another obj ect of the present invention is to provide an apparatus for measuring the height of the electrical contact line of a railroad which takes into account the variability of the measurements of the railroad vehicle used, for example due to deformations caused by thermal expansions or warping of the entire vehicle.

Another obj ect of the present invention is to provide an apparatus for measuring the height of the electrical contact line of a railroad which allows to take into account systematic errors caused by a contact bar which is not perfectly straight, for example due to manufacturing defects or due to wear.

Another object of the present invention is to record and archive the height and pressure data by referring them to the progressive distance, i.e., to the distance traveled by the railcar, so as to be able to compare different test trips or different static tests in order to obtain the differences in height as a function of the differences in pressure.

Another obj ect of the present invention is to provide an apparatus for characterizing the electrical contact line of a railroad which is highly reliable, relatively simple to manufacture and at competitive costs.

This aim and these and other objects, which will become better apparent hereinafter, are achieved by an apparatus for measuring the height of an electrical contact line of a railroad and its variations as a function of the variation of the pressure applied by a pantograph, characterized in that it comprises, installed on board a railcar:

first measurement means, which are adapted to measure the height of the bottom of the railcar with respect to a plane that contains the rails;
second measurement means, which are adapted to measure the extension of the pantograph of said railcar; and
third measurement means, which are adapted to measure a reference height, said first, third and fourth measurement means being arranged respectively at the two mutually opposite sides of the railcar.

Further characteristics and advantages of the present invention will become better apparent from the following detailed description of a preferred but not exclusive embodiment of the apparatus according to the present invention, illustrated by way of non-limiting example in the accompanying drawings, wherein:

Figure 1 is a chart which plots the heights involved with the apparatus and the method according to the present invention;
Figure 2 is a side elevation view of a railcar with the measurement apparatus according to the present invention installed thereon;
Figure 3 is a front elevation view of the railcar of Figure 2; and
Figure 4 is a chart which plots the heights involved with the apparatus and the method according to the present invention and illustrates a possible improvement of the measurement with respect to the chart of Figure 1.

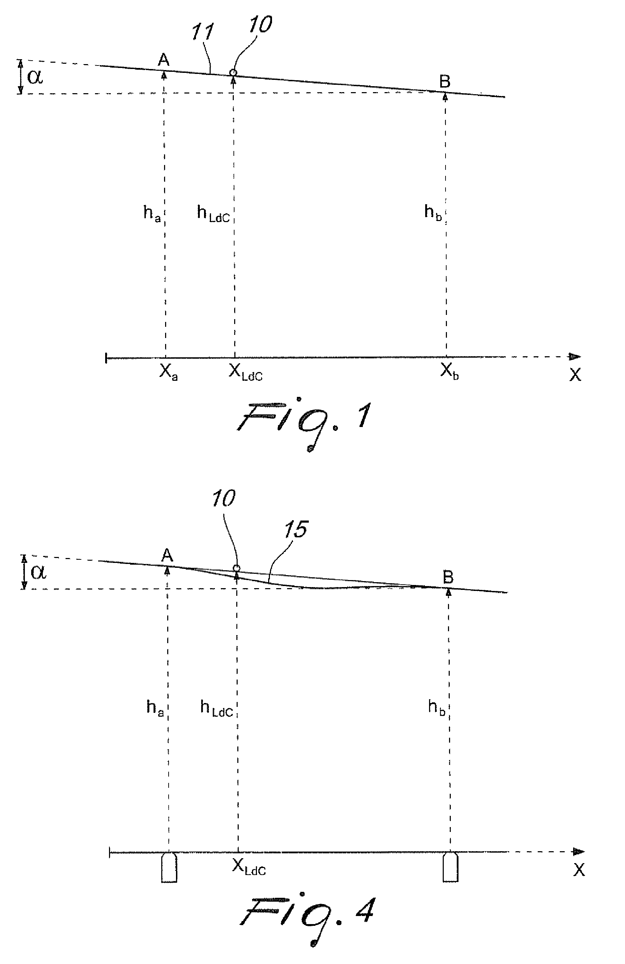

With reference to the figures, and initially with reference to Figure 1, the method according to the invention defines first of all an axis of the abscissas X, which is defined as a straight line which passes through the points of contact between the wheels and the rails, and an axis of the ordinates, which is instead the normal with respect to the plane of the rails which passes through one end of the contact bow 11.
These data are the subject of measurements and therefore are known. In particular, the following are known:

- the height of a point A, which is one of the ends of the bow and is designated as $h_a$, with the abscissa $X_a$;
- the height of a point B, which is the second end of the bow, in which the abscissa is $X_b$ and the height is $h_b$.

Further, the abscissa $X_{Ldc}$ of the contact line 10 is known by way of the measurement of the polygonal line.
Therefore, in order to determine the height of the contact line 10, the calculations are as follows:

$$h_{LdC} = h_a + \frac{(h_b - h_a)}{(x_b - x_a)} \; (x_{LdC} - x_a); \qquad\qquad (1)$$

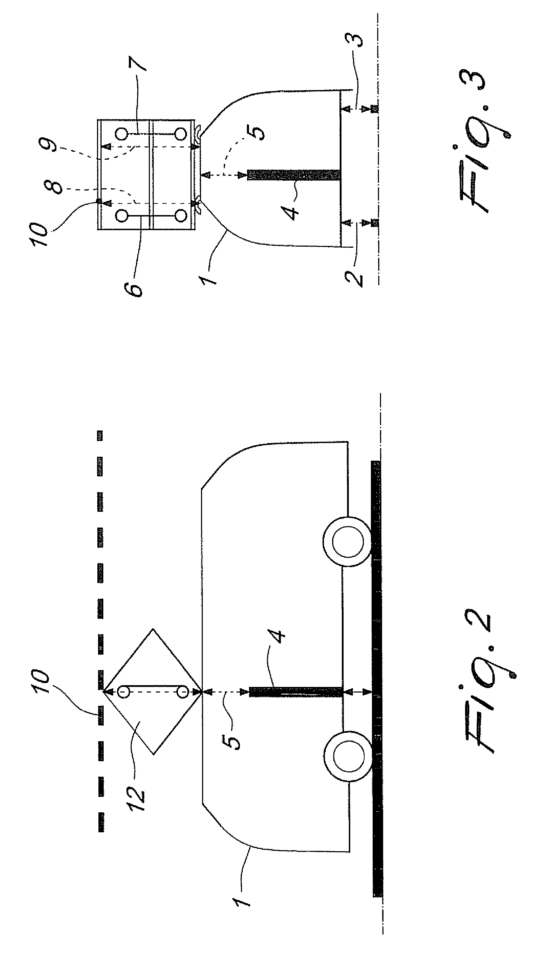

where $h_{LdC}$ is the height of the contact line.
The above expression is the equation of a straight line in which the ordinate is at the origin $h_a$ and the angular coefficient is given by the angle of inclination of the bow designated by $\alpha$.
The above measurements are performed as follows.
The values of $h_a$ and $h_b$ are given by a sum of different heights, in order to take into account the variability of the measurements of the railcar.
In particular, with reference to Figures 2 and 3, the reference numeral 1 designates a railcar on which the apparatus according to the invention is installed in order to perform the measurements mentioned above and therefore obtain, by means of the expression described above, the height of the contact line, which is designated by the reference numeral 10 in Figure 1.
The apparatus comprises first means for detecting the height of the railcar 1 with respect to the ground (the plane that contains the rails), constituted conveniently by two laser sensors 2 and 3, which are arranged respectively at mutually opposite sides of the railcar, as shown in Figure 3.
These sensors therefore measure the height of the bed of the railcar 1 with respect to the plane of the rails.
The apparatus further comprises optionally means for measuring the height of the railcar, which are suitable to measure the distance of a calibrated reference element 4 with respect to the roof of the railcar.
Conveniently, the means for measuring the height of the railcar are designated by the reference numeral 5 and comprise a laser height sensor.
Substantially, the laser height sensor 5 detects the distance between the reference element 4 (for example a calibrated block) and the roof of the railcar.
This allows to take into account any thermal expansions or any warping of the entire railcar 1.
The apparatus further comprises means suitable to detect the vertical stroke of the pantograph 12 of the railcar 1, and this stroke becomes an absolute measurement when a starting level is fixed.
Conveniently, such means for measuring the stroke of the pantograph are constituted by two incremental wire encoders, which are designated respectively by the reference numerals 6 and 7 and are fitted between the top of the railcar 1 and the ends of the contact bar 11.

The apparatus further comprises additional height sensing means, which allow to measure a height between the ceiling of the railcar 1 and the contact line 10. Such height sensing means are constituted conveniently by laser height sensors, which determine the first time a height factor, such as the difference between the sum of the acquired measurements and a known height from the bar or contact line 10. The lasers allow to record this value in order to use it, in case the encoders are reset, as their initial value (0).

Moreover, the apparatus provides for a sum of fixed parts, i.e., of parts which are not measured dynamically. This measurement is performed only once, or when one wishes to confirm the stability of the measurement, in a point of known height.

Therefore, values for example of the left fixed part are stored, which are given by a difference between a known left height and the sum of the measurements made by the height detection means 2, the height detection means 5 and the height detection means 8.

These measurements are stored during calibration; dynamically, the left and right heights are calculated as the sum of the fixed part and of the acquired measurements.

The measurements made according to the apparatus and the method described above, however, can be influenced by a systematic error caused by a contact bar or bow 11 which is not perfectly straight.

The bow 11 in fact might not be perfectly straight due to manufacturing defects or due to wear.

Therefore, in this case the actual shape of the bow 11 would influence the measurement. In order to obviate this problem, the actual profile of the component 11 can be characterized with a search table or an interpolation polynomial $R(x)$.

The actual profile is designated by the reference numeral 15 in Figure 4.

With this function it is possible to correct the error caused by the less than perfect flatness of the component.

In view of the above, the equation described earlier for determining the height of the contact line $h_{LdC}$ can be modified as follows:

$$h_{LdC} = h_a + \frac{(h_b - h_a)}{(x_b - x_a)}\ (x_{LdC} - x_a) + \frac{[r(x_{LdC}\cos\alpha)]}{\cos\alpha}\ ; \qquad (2)$$

wherein the angle $\alpha$ is given by:

$$sen\alpha\ =\ \frac{(h_a - h_b)}{\overline{AB}}\ ;\ \alpha = arcsen\ \left(\frac{(h_a - h_b)}{\overline{AB}}\right)$$

As can be seen from the comparison of the preceding equation with the equation given above, which does not take into account the defect of the contact bar 11, a function $R(x)$ has been added which is useful in eliminating the following problems.

The presence of the sine and cosine goniometric functions must be evaluated on the basis of the angular displacement: in the case being considered, an angle of a few degrees is considered, and therefore with a good approximation one can consider the cosine of $\alpha$ to approximate 1.

Further, it is necessary to consider:

- the period of validity of the characterization of the profile of the bow, depending on considerations regarding the wear of the component;
- the forces involved: it is necessary to consider the flexing of the component 11, since if the bow 11 works with high forces, they produce an inflection which would require characterization at various pressure values.

Substantially, the apparatus and the method according to the invention allow to determine the height of the contact line 10 by using mechanical and optical measurement means and by also taking into account the actual shape of the bow.

In practice it has been found that the method and the apparatus according to the present invention fully achieve the intended aim and objects, since they allow to characterize the contact line with respect to the wheel-track axis with characteristics of traceability and accuracy.

The method and the apparatus thus conceived are susceptible of numerous modifications and variations, all of which are within the scope of the appended claims; all the details may further be replaced with other technically equivalent elements.

The disclosures in Italian Patent Application No. MI2005A000587 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1. An apparatus for measuring the height of an electrical contact line of a railroad and its variations as a function of the variations of the pressure applied by a pantograph, **characterized in that** it comprises, installed on board a railcar:

   first measurement means, which are adapted to measure the height of the bottom of the railcar with respect to a plane that contains the rails;
   second measurement means, which are adapted to measure the extension of the pantograph of said railcar; and
   third measurement means, which are adapted to measure a reference height, said first, third and fourth measurement means being arranged respectively at the two mutually opposite sides of the railcar.

2. The apparatus according to claim 1, **characterized in that** it comprises:

   fourth measurement means, which are adapted to measure the height of the ceiling of the railcar with respect to the bottom of said railcar.

3. The apparatus according to claim 1, **characterized in that** said first measurement means comprise laser height sensors arranged at each side of the railcar.

4. The apparatus according to claim 1, **characterized in that** said second measurement means comprise two encoders arranged at each side of the railcar.

5. The apparatus according to claim 1, **characterized in that** said third measurement means comprise two laser sensors, which are arranged at each side of the railcar, on the pantograph of said railcar.

6. The apparatus according to claim 2, **characterized in that** said fourth measurement means comprise a laser sensor, which is adapted to measure the height between the end of a reference element of known length and the roof of said railcar.

7. The apparatus according to one or more of the preceding claims,
   **characterized in that** said first, second, third and fourth measurement means take measurements acquired on the normal to the rails which passes through the bow or contact bar of said railcar.

8. A method for determining the height of the contact line of a railroad, which comprises the steps of:

   measuring the height of the ends of the bow or contact bar with respect to the ground, relative to a Cartesian plane in which the axis of the abscissas is a straight line which passes through the points of contact between the wheels and the rails and the axis of the ordinates is the normal to the rail plane which passes through one end of the bow;
   defining the abscissa values of the heights of the ends of said bow;
   defining the abscissa that corresponds to the intersection point between the contact line and said bow; and
   determining the height of the contact line by means of the following formula:

$$h_{LdC} = h_a + \frac{(h_b - h_a)}{(x_b - x_a)}(x_{LdC} - x_a); \qquad (1)$$

wherein $h_a$ and $h_b$ are the respective heights of the ends of said bow and $X_a$ and $X_b$ are the respective abscissas,

$X_{LdC}$ being the abscissa that corresponds to the point of contact between said contact line and said bow.

9. The method according to claim 8, **characterized in that** it further comprises a step of compensating, by means of an interpolation polynomial, the actual profile of said bow in order to correct errors caused by the non-planarity of said bow.

10. The method according to claim 8, **characterized in that** it comprises the step of recording the height data of the line synchronously with the progressive distance of the line.

Fig. 1

Fig. 4

Fig.2

Fig.3

EP 1 710 117 A1

European Patent

Office

**EUROPEAN SEARCH REPORT**

Application Number

EP 06 11 2248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 25 47 081 A1 (LICENTIA PATENT-VERWALTUNGS-GMBH) 21 April 1977 (1977-04-21) * the whole document * | 1,8 | INV. B60M1/28 |
| A | US 2003/142297 A1 (CASAGRANDE ETTORE) 31 July 2003 (2003-07-31) * the whole document * | 1,8 | |
| A | US 5 161 312 A (THEURER ET AL) 10 November 1992 (1992-11-10) * the whole document * | 1 | |
| A | JP 09 163502 A (CENTRAL JAPAN RAILWAY CO; HITACHI ELECTRON ENG CO LTD) 20 June 1997 (1997-06-20) * figures 1-5 * | 8 | |
| A | PATENT ABSTRACTS OF JAPAN vol. 1997, no. 10, 31 October 1997 (1997-10-31) & JP 09 163502 A (CENTRAL JAPAN RAILWAY CO; HITACHI ELECTRON ENG CO LTD), 20 June 1997 (1997-06-20) * abstract * | 8 | TECHNICAL FIELDS SEARCHED (IPC) B60M |
| A | FR 2 677 941 A (SCLE) 24 December 1992 (1992-12-24) * the whole document * | 1 | |

The present search report has been drawn up for all claims

| Place of search | Date of completion of the search | Examiner |
|---|---|---|
| The Hague | 9 August 2006 | Bolder, G |

EPO FORM 1503 03.82 (P04C01)

# EP 1 710 117 A1

## ANNEX TO THE EUROPEAN SEARCH REPORT
## ON EUROPEAN PATENT APPLICATION NO.

EP 06 11 2248

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2006

| Patent document cited in search report | | Publication date | Patent family member(s) | | Publication date |
|---|---|---|---|---|---|
| DE 2547081 | A1 | 21-04-1977 | NONE | | |
| US 2003142297 | A1 | 31-07-2003 | AU | 7063401 A | 30-01-2002 |
| | | | CN | 1431961 A | 23-07-2003 |
| | | | WO | 0206077 A1 | 24-01-2002 |
| | | | EP | 1305182 A1 | 02-05-2003 |
| | | | IT | VE20000036 A1 | 18-01-2002 |
| US 5161312 | A | 10-11-1992 | AU | 638867 B2 | 08-07-1993 |
| | | | AU | 8488991 A | 09-04-1991 |
| | | | CN | 1060711 A | 29-04-1992 |
| | | | CS | 9103005 A3 | 13-05-1992 |
| | | | DE | 59100694 D1 | 20-01-1994 |
| | | | EP | 0479764 A1 | 08-04-1992 |
| | | | FI | 914624 A | 04-04-1992 |
| | | | HU | 59060 A2 | 28-04-1992 |
| | | | JP | 4230434 A | 19-08-1992 |
| | | | PL | 291889 A1 | 26-06-1992 |
| | | | SK | 278636 B6 | 10-12-1997 |
| | | | RU | 2025323 C1 | 30-12-1994 |
| JP 9163502 | A | 20-06-1997 | JP | 3706976 B2 | 19-10-2005 |
| JP 09163502 | A | 20-06-1997 | JP | 3706976 B2 | 19-10-2005 |
| FR 2677941 | A | 24-12-1992 | NONE | | |

EPO FORM P0459

For more details about this annex : see Official Journal of the European Patent Office, No. 12/82

10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT MI20050587 A